# FASCICULE DE BREVET EUROPEEN

(11) **EP 3 915 884 B1**
(45) Date de publication et mention de la délivrance du brevet: **15.02.2023**
(21) Numéro de dépôt: 20305560.3
(22) Date de dépôt: 28.05.2020
(51) Int. Cl.: B64G 1/10, B32B 3/08, B64G 1/42, H02G 3/38, B32B 3/12, B32B 5/18

(54) **DISTRIBUTION DE PUISSANCE ÉLECTRIQUE INTÉGRÉE À UN PANNEAU STRUCTURAL DE SATELLITE**
VERTEILUNG DER IN EINER SATELLITEN-BAUPLATTE INTEGRIERTEN ELEKTRISCHEN ENERGIE
DISTRIBUTION OF ELECTRIC POWER INTEGRATED IN A STRUCTURAL SATELLITE PANEL

(43) Date de publication de la demande: 01.12.2021
(73) Titulaire: THALES, 92400 Courbevoie (FR)
(72) Inventeur: BEKEMANS, Marc, 6032 CHARLEROI (BE); VANDEPLASSCHE, Philippe, 6032 CHARLEROI (BE); MABED, Barbara, 6041 GOSSELIES (BE)
(74) Mandataire: Atout PI Laplace

(56) Documents cités:
- EP-A1- 3 336 991
- WO-A1-2019/138660
- DE-A1-102010 000 346
- FR-A1- 2 898 872
- FR-A1- 2 924 894
- GB-A- 2 517 465
- JP-A- H1 111 400
- US-A1- 2013 299 642

## Description

L'invention porte sur un panneau structural pour satellites et concerne la distribution de l'énergie électrique à bord des satellites. L'échange de l'énergie électrique entre les batteries, le boîtier de conditionnement de puissance et certains gros consommateurs comme la charge utile se fait au moyen de câbles électriques.

La distribution du courant continu entre certains équipements du satellite nécessite la mise en parallèle de nombreux fils pour pouvoir conduire le courant avec un minimum de perte et limiter les échauffements.

La problématique est accrue dans les applications spatiales car les câbles sont dans le vide et par conséquent, le refroidissent se fait principalement par rayonnement.

Aussi, l'intérieur des satellites se retrouve généralement avec une forêt de fils qui recouvre les équipements électroniques. Cela représente une masse embarquée non négligeable qui peut se traduire par un coût de l'ordre de 40 k€/kg.

Un autre point critique de l'utilisation des fils concerne les perturbations électromagnétiques. En effet, les courants électriques à hautes fréquences autorisés sur ces câbles sont limités en amplitude pour limiter le rayonnement électromagnétique. Cela contraint les équipementiers à placer des filtres en entrée et parfois en sortie ce qui ajoute encore de la masse au sous-système de harnais électriques.

Le document GB2517465 A divulgue un panneau comportant des fils électriques intégrés.

Un but de l'invention est de pallier les problèmes précédemment cités.

Il est proposé, selon un aspect de l'invention, un panneau structural pour satellite comprenant une peau externe, une peau interne et une couche coeur disposée entre les deux peaux interne et externe et munie d'un évidement aveugle comprenant au moins un jeu de barres inséré (également appelé barre omnibus ou "busbar" en langue anglaise) électriquement isolé.

Ainsi, positionnés à cet endroit, les conducteurs sont idéalement refroidis par conduction ce qui permet de réduire la section des conducteurs au minimum et par conséquent la masse.

Selon l'invention, le jeu de barres comprend un assemblage de couches électriquement isolantes et de couches électriquement conductrices de sorte que chaque couche conductrice soit doublement isolée électriquement par une enveloppe formée de deux couches électriquement isolantes.

Cette double isolation rend le panneau robuste à un défaut d'un des deux isolants. Cette caractéristique de double isolation est requise pour les applications spatiales qui doivent être fiables et tolérante à une panne.

Selon l'invention, le panneau structural comprend un matériau d'assemblage comblant l'évidement aveugle pour maintenir fixement le jeu de barres inséré.

Par exemple, le matériau d'assemblage est de la mousse rigide, de la résine ou de la colle.

Selon un mode de réalisation, une barre de jeu de barres comprend au moins deux contacts électriques destinées à connecter un élément disposé à l'extérieur du panneau du côté de la peau interne.

Ainsi, il est aisé de connecter électriquement deux équipements.

Dans un mode de réalisation, un contact électrique comprend deux plots de contact.

Ainsi, le panneau est tolérant aux défauts d'un des deux plots de contacts. Un mauvais contact éventuel pourrait par échauffement dégrader l'isolation et par conséquent la double isolation entrainant un court-circuit entre deux barres du jeu de barres. La présence d'un deuxième contact en parallèle évite cet échauffement en proposant toujours au moins un chemin parfaitement conducteur. Cette redondance augmente donc la fiabilité.

Selon un mode de réalisation, la couche coeur comprend un matériau en structure alvéolée.

Par exemple, la couche coeur comprend un matériau en structure alvéolée est en nid d'abeilles.

Un tel panneau structural comprenant une couche en nid d'abeilles : il s'agit d'une structure alvéolée hexagonale très légère enfermée entre deux feuilles d'aluminium. Le conducteur placé entre ces parois est idéalement blindé du point de vue électromagnétique, par conséquent, des courants de haute fréquence plus importants peuvent y circuler. Des mesures ont montré que l'on pouvait augmenter d'un facteur dix les courants de haute fréquence dans des conducteurs pris dans ces panneaux. Cela a une conséquence directe sur les filtres électriques qui peuvent être limités, ce qui permet d'avoir un effet de réduction de masse et donc de coût.

Dans un mode de réalisation, le jeu de barres inséré comprend trois barres, correspondant respectivement à deux sources de tension différentes et une mase commune.

Il est également proposé, selon un autre aspect de l'invention, un satellite comprenant au moins un panneau structural tel que précédemment décrit.

L'invention sera mieux comprise à l'étude de quelques modes de réalisation décrits à titre d'exemples nullement limitatifs et illustrés par les dessins annexés sur lesquels les figures :
La figure 1 illustre schématiquement un panneau structural pour satellite, selon un aspect de l'invention ;
La figure 2 illustre schématiquement un jeu de barres, selon un aspect de l'invention ;
La figure 3 illustre schématiquement un jeu de barres et une connexion, selon un aspect de l'invention ; et
La figure 4 illustre schématiquement un satellite, selon un aspect de l'invention.

Sur l'ensemble des figures, les éléments ayant des références identiques sont similaires.

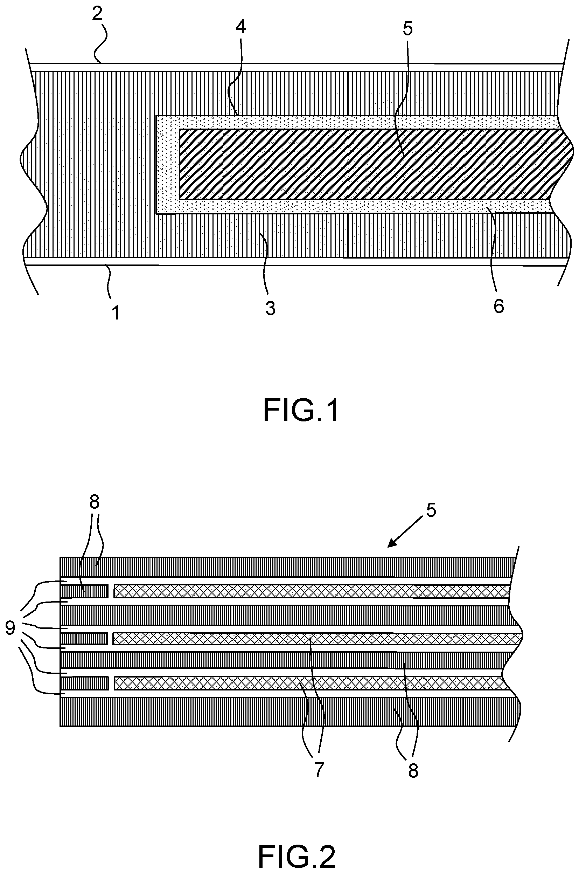

La figure 1 représente, en plan de coupe, un panneau structural selon un aspect de l'invention, comprenant une peau externe 1, par exemple électro-magnétiquement blindée, destinée à être à l'extérieur d'un satellite, une peau interne 2, par exemple électro-magnétiquement blindée, destinée à être à l'intérieur du satellite et une couche coeur 3 disposée entre les deux peaux interne 2 et externe 1 et munie d'un évidement aveugle 4 comprenant au moins un jeu de barres inséré 5. Un matériau d'assemblage 6 comble l'évidement aveugle 4 afin de maintenir fixement le jeu de barres inséré 5.

La figure 2 représente, en plan de coupe, le détail d'un jeu de barres 5 comprenant un assemblage de couches électriquement conductrices 7 et de couches électriquement isolantes 8 de sorte que chaque couche conductrice 7 soit électriquement isolée par une enveloppe formée de deux couches électriquement isolantes 8. Par exemple, le jeu de barres 5 comprend trois barres ou couches conductrices 7 électriquement isolées par une enveloppe respective formée de deux couches électriquement isolantes 6. Deux couches contigües sont fixées entre-elles par une couche adhésive 9, par exemple un préimprégné ou "prepreg" en langue anglaise.

Le matériau d'assemblage 6 peut être, de la mousse rigide, de la résine ou de la colle.

La couche coeur 3 est, par exemple, un matériau en structure alvéolée, ou un matériau de type mousse rigide.

Avantageusement la couche coeur 3 est un matériau en structure alvéolée de type nid d'abeilles. Le nid d'abeilles couramment appelé NIDA est constitué d'une structure alvéolée hexagonale enfermée entre deux fines feuilles d'aluminium. Les conducteurs placés à l'intérieur de cette structure composite se trouvent donc idéalement blindés d'un point de vue électromagnétique, par construction. Par conséquent des courants de hautes fréquences plus importants peuvent circuler sans perturber leur environnement. Des mesures ont montré que l'on pouvait augmenter d'un facteur dix les courants de hautes fréquences dans des conducteurs qui seraient emprisonnés dans un NIDA. Cela à une conséquence directe sur le dimensionnement des filtrages électriques qui peuvent être réduits en taille et donc en masse.

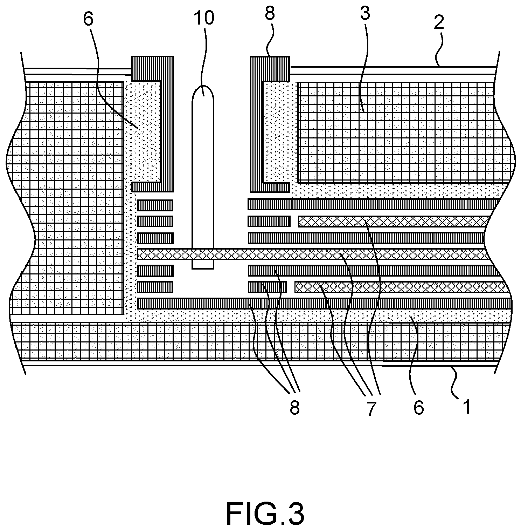

La figure 3 représente un contact électrique 10 connecté à une barre d'un jeu de barres 5, en vue de coupe, selon un aspect de l'invention. La connexion entre le contact électrique 10 et la barre du jeu de barres 5 peut être réalisée par soudage ou sertissage.

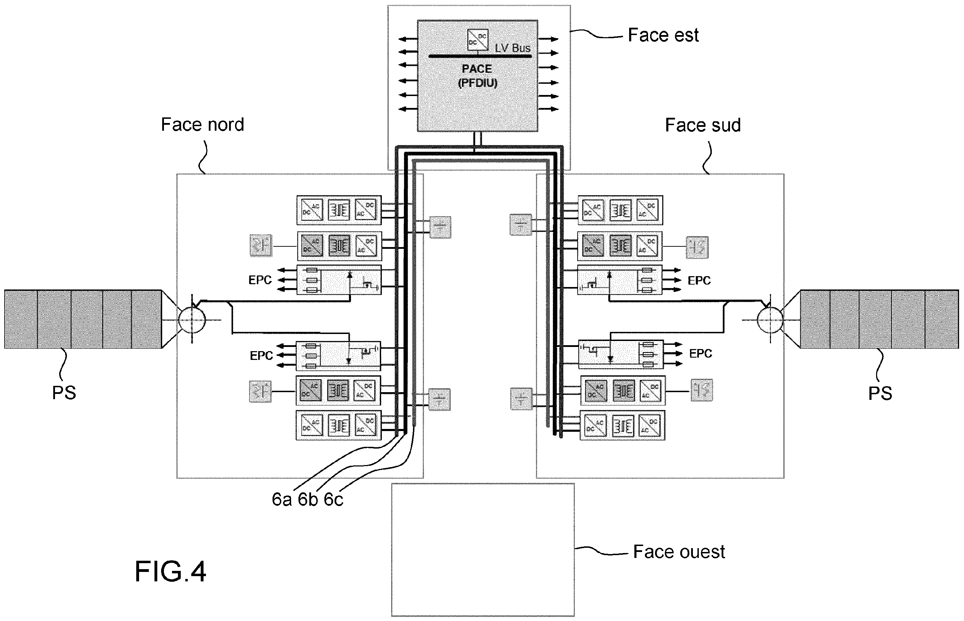

La figure 4 représente schématiquement un satellite dont les faces comprennent des panneaux structurels comme décrits précédemment. Le satellite comprend donc dans ses panneaux un jeu de barres comprenant par exemple trois barres ou bus : un bus de courants haute tension 6a, un bus de courant basse tension 6c et un bus de masse commune 6b.

## Revendications

1. Panneau structural pour satellite comprenant une peau externe (1), une peau interne (2) et une couche coeur (3) disposée entre les deux peaux (1, 2) interne et externe et munie d'un évidement aveugle (4), **caractérisé en ce que** l'évidemment aveugle comprend au moins un jeu de barres inséré (5) électriquement isolé, le jeu de barres (5) comprenant un assemblage de couches électriquement isolantes (8) (6) et de couches électriquement conductrices (7) de sorte que chaque couche conductrice (7) soit doublement isolée électriquement par une enveloppe formée de deux couches électriquement isolantes (8), et le panneau comprenant un matériau d'assemblage (6) comblant l'évidement aveugle pour maintenir fixement le jeu de barres inséré (5).

2. Panneau structural pour satellite selon la revendication 1, dans lequel le matériau d'assemblage est de la mousse rigide, de la résine ou de la colle.

3. Panneau structural pour satellite selon l'une des revendications précédentes, dans lequel une barre de jeu de barres (5) comprend au moins deux contacts électriques (10) destinées à connecter un élément disposé à l'extérieur du panneau du côté de la peau interne.

4. Panneau structural pour satellite selon la revendication 3, dans lequel un contact électrique (10) comprend deux plots de contact.

5. Panneau structural pour satellite selon l'une des revendications précédentes, dans lequel la couche coeur (3) comprend un matériau en structure alvéolée.

6. Panneau structural pour satellite selon la revendication 5, dans lequel la couche coeur comprend un matériau en structure alvéolée est en nid d'abeilles.

7. Panneau structural pour satellite selon l'une des revendications précédentes, dans lequel le jeu de barres inséré comprend trois barres correspondant à deux sources de tension différentes et une masse commune.

8. Satellite comprenant au moins un panneau structural selon l'une des revendications précédentes.

## Patentansprüche

1. Satellitenbauplatte, die eine Außenhaut (1), eine Innenhaut (2) und eine zwischen den beiden Innen- und Außenhäuten (1, 2) angeordnete und mit einer Blindaussparung (4) versehene Kernschicht (3) umfasst, **dadurch gekennzeichnet, dass** die Blindaussparung mindestens eine eingefügte, elektrisch isolierte Sammelschiene (5) umfasst, wobei die Sammelschiene (5) eine Anordnung von elektrisch isolierenden Schichten (8) und elektrisch leitenden Schichten (7) umfasst, so dass jede leitende Schicht (7) durch eine aus zwei elektrisch isolierenden Schichten (8) gebildete Umhüllung elektrisch doppelt isoliert ist, und wobei die Platte ein Montagematerial (6) umfasst, das die Blindaussparung ausfüllt, um die eingefügte Sammelschiene (5) festzuhalten.

2. Satellitenbauplatte nach Anspruch 1, wobei das Montagematerial Hartschaum, Harz oder Klebstoff ist.

3. Satellitenbauplatte nach einem der vorhergehenden Ansprüche, wobei eine Sammelschienenschiene (5) mindestens zwei elektrische Kontakte (10) umfasst, die zum Anschließen eines außerhalb der Platte auf der Seite der Innenhaut angeordneten Elements bestimmt sind.

4. Satellitenbauplatte nach Anspruch 3, wobei ein elektrischer Kontakt (10) zwei Kontaktstellen umfasst.

5. Satellitenbauplatte nach einem der vorhergehenden Ansprüche, wobei die Kernschicht (3) ein Material mit Wabenstruktur umfasst.

6. Satellitenbauplatte nach Anspruch 5, wobei die Kernschicht ein Material mit Wabenstruktur umfasst ist honigwabenförmig.

7. Satellitenbauplatte nach einem der vorhergehenden Ansprüche, wobei die eingefügte Sammelschiene drei Schienen umfasst, die zwei verschiedenen Spannungsquellen und einer gemeinsamen Masse entsprechen.

8. Satellit der mindestens eine Bauplatte nach einem der vorhergehenden Ansprüche umfasst.

## Claims

1. Structural panel for a satellite comprising an external skin (1), an internal skin (2) and a core layer (3) arranged between the two, internal and external, skins (1, 2) and provided with a blind void (4), **characterised in that** the blind void comprises at least one electrically insulated inserted busbar (5), the busbar (5) comprising a set of electrically insulating layers (8) and of electrically conductive layers (7) such that each conductive layer (7) is doubly electrically insulated by an envelope formed of two electrically insulating layers (8), and the panel comprising a joining material (6) filling the blind void in order to keep the inserted busbar (5) fixed in place.

2. Structural panel for a satellite according to claim 1, wherein the joining material is rigid foam, resin or glue.

3. Structural panel for a satellite according to one of the preceding claims, wherein a bar of the busbar (5) comprises at least two electrical contacts (10) that are intended to connect an element arranged outside the panel on the side of the internal skin.

4. Structural panel for a satellite according to claim 3, wherein an electrical contact (10) comprises two contact pads.

5. Structural panel for a satellite according to one of the preceding claims, wherein the core layer (3) comprises a material with a cellular structure.

6. Structural panel for a satellite according to claim 5, wherein the core layer comprises a material with a cellular structure which is honeycomb shaped.

7. Structural panel for a satellite according to one of the preceding claims, wherein the inserted busbar comprises three bars corresponding to two different voltage sources and a common ground.

8. Satellite comprising at least one structural panel according to one of the preceding claims.
